# EUROPÄISCHE PATENTSCHRIFT

(11) **EP 1 306 195 B1**
(45) Veröffentlichungstag und Bekanntmachung des Hinweises auf die Patenterteilung: **27.06.2007**
(21) Anmeldenummer: 02018446.1
(22) Anmeldetag: 16.08.2002
(51) Int. Cl.: B29C 49/78, G05B 19/04, B29K 67/00, B29L 22/00

(54) **Verfahren und Vorrichtung zur Steuerung eines Blasvorganges**
Process and apparatus for controlling a blow operation
Procédé et dispositif pour la commande d'une opération de soufflage

(30) Priorität: 26.10.2001 DE 10153045
(43) Veröffentlichungstag der Anmeldung: 02.05.2003
(73) Patentinhaber: SIG Corpoplast GmbH & Co. KG, 22145 Hamburg (DE)
(72) Erfinder: Dose, Wolfgang, 21109 Hamburg (DE); Herklotz, Thorsten, 22926 Ahrensburg (DE); Wiedenfeld, Walter, 22419 Hamburg (DE)
(74) Vertreter: Klickow, Hans-Henning

(56) Entgegenhaltungen:
- WO-A-00/16964
- DE-A- 19 909 307
- US-A- 5 185 109
- US-A- 5 244 610
- US-B1- 6 186 760
- PATENT ABSTRACTS OF JAPAN Bd. 1997, Nr. 11, 28. November 1997 (1997-11-28) & JP 9 174673 A (MITSUBISHI PLASTICS IND LTD), 8. Juli 1997 (1997-07-08)

## Beschreibung

Die Erfindung betrifft ein Verfahren zur Steuerung eines Blasvorganges, bei dem auf einem rotierenden Blasrad angeordneten Blasstationen zur Blasverformung von spritzgegossenen thermoplastischen Vorformlingen in Behälter mindestens ein unter Druck stehendes Blasfluid zugeführt wird und bei dem mindestens zeitweilig eine aktuelle Rotationspositionierung des Blasrades meßtechnisch erfaßt sowie die entsprechenden Informationen von einer Auswertungseinheit mit Schaltpositionsvorgaben für die Zufuhr und Ableitung des Blasfluids verglichen werden.

Die Erfindung betrifft darüber hinaus eine Vorrichtung zur Steuerung eines Blasvorganges zur Behälterformung aus spritzgegossenen Vorformlingen, die mindestens ein steuerbares Ventil aufweist, das im Bereich einer Zuführleitung für ein Blasfluid angeordnet ist und bei der die zuführleitung eine Blasfluidversorgung mit mindestens einer Blasstation verbindet, die auf einem rotierenden Blasrad angeordnet ist und die mit einer Meßwerterfassung sowie mit mindestens einem Positionssensor zur Erfassung einer Rotationspositionierung des Blasrades versehen ist sowie bei der die Meßwerterfassung mit einer Auswertungseinheit zur Schaltung der Ventile verbunden ist.

Derartige Verfahren und Vorrichtungen werden insbesondere bei der Herstellung von blasgeformten Behältern eingesetzt, um eine mit der Durchführung des Blasvorganges koordinierte Zuleitung eines oder mehrerer Blasdrücke sowie eine Ableitung des Blasdruckes nach einer Ausformung des Behälters durchführen zu können.

Bei einer derartigen Behälterformung durch Blasdruckeinwirkung werden Vorformlinge aus einem thermoplastischen Material, beispielsweise Vorformlinge aus PET (Polyethylenterephthalat), innerhalb einer Blasmaschine unterschiedlichen Bearbeitungsstationen zugeführt. Typischerweise weist eine derartige Blasmaschine eine Heizeinrichtung sowie eine Blaseinrichtung auf, in deren Bereich der zuvor temperierte Vorformling durch biaxiale Orientierung zu einem Behälter expandiert wird. Die Expansion erfolgt mit Hilfe von Druckluft, die in den zu expandierenden Vorformling eingeleitet wird. Der verfahrenstechnische Ablauf bei einer derartigen Expansion des Vorformlings wird in der DE-OS 43 40 291 erläutert.

Der grundsätzliche Aufbau einer Blasstation zur Behälterformung wird in der DE-OS 42 12 583 beschrieben. Möglichkeiten zur Temperierung der Vorformlinge werden in der DE-OS 23 52 926 erläutert.

Innerhalb der Vorrichtung zur Blasformung können die Vorformlinge sowie die geblasenen Behälter mit Hilfe unterschiedlicher Handhabungseinrichtungen transportiert werden. Bewährt hat sich insbesondere die Verwendung von Transportdornen, auf die die Vorformlinge aufgesteckt werden. Die vorformlinge können aber auch mit anderen Trageinrichtungen gehandhabt werden. Die Verwendung von Greifzangen zur Handhabung von Vorformlingen und die Verwendung von Spreizdornen, die zur Halterung in einen Mündungsbereich des vorformlings einführbar sind, gehören ebenfalls zu den verfügbaren Konstruktionen.

Die bereits erläuterte Handhabung der Vorformlinge erfolgt zum einen bei den sogenannten Zweistufenverfahren, bei denen die Vorformlinge zunächst in einem Spritzgußverfahren hergestellt, anschließend zwischengelagert und erst später hinsichtlich ihrer Temperatur konditioniert und zu einem Behälter aufgeblasen werden. Zum anderen erfolgt eine Anwendung bei den sogenannten Einstufenverfahren, bei denen die Vorformlinge unmittelbar nach ihrer spritzgußtechnischen Herstellung und einer ausreichenden Verfestigung geeignet temperiert und anschließend aufgeblasen werden.

Im Hinblick auf die verwendeten Blasstationen sind unterschiedliche Ausführungsformen bekannt. Bei Blasstationen, die auf rotierenden Transporträdern angeordnet sind, ist eine buchartige Aufklappbarkeit der Formträger häufig anzutreffen. Es ist aber auch möglich, relativ zueinander verschiebliche oder andersartig geführte Formträger einzusetzen. Bei Blasstationen, die insbesondere dafür geeignet sind, mehrere Kavitäten zur Behälterformung aufzunehmen, werden neben aufklappbaren Formen auch parallel zueinander angeordnete Platten als Formträger verwendet.

Im Hinblick auf die ständig zunehmenden Produktionsgeschwindigkeiten bei der Herstellung von Behältern, die zur Zeit durch eine Leistungsfähigkeit von etwa 1650 Flaschen je Blasstation und Stunde charakterisiert sind, erweist sich eine exakte und reproduzierbare Ansteuerung der Ventile für die Blasluft als ein entscheidendes Kriterium für die Herstellung qualitativ hochwertiger Behälter. Insbesondere zeigt es sich, daß beim Einsatz von zentralen Maschinensteuerungen durch die hier vorgegebene Taktung unter zusätzlicher Berücksichtigung von Schaltverzögerungen der Ventile sowie unter Berücksichtigung von auftretenden Toleranzen bereits das Zusammenwirken dieser Faktoren zu deutlich erkennbaren Schwankungen in der Materialverteilung der blasgeformten Behälter führt.

Aus der US-A-5, 244, 610 sind ein Verfahren und eine Vorrichtung zur Extrusionsblasformung von Behältern bekannt. Es werden hierbei extrudierte schlauchförmige vorformlinge zwischen Blasformhälften eingeklemmt und anschließend zu den Behältern umgeformt. Die Blasformen sind auf einer Blastrommel angeordnet, die um eine horizontal verlaufende Drehachse rotiert. Die Blasluftzuführung erfolgt unter Verwendung von gesteuerten Blasventilen.

In der WO 00/16964 A wird eine Vorrichtung zur Blasformung von Behältern aus zuvor spritzgegossenen Vorformlingen beschrieben. Blasstationen sind hierbei auf einem Blasrad angeordnet, das um eine vertikal verlaufende Drehachse rotiert.

In der US-B1-6,186,760 wird ein Überwachungs- und Steuersystem für Blasmaschinen beschrieben, bei dem eine mit einem Blasrad gemeinsam rotierende Prozeßsteuerung sowie eine stationär angeordnete Maschinensteuerung verwendet werden. Die Maschinensteuerung und die Prozeßsteuerung sind drahtlos miteinander gekoppelt. Die Prozeßsteuerung umfaßt eine Blasdrucksteuerung, bei der unter Verwendung von Servoventilen der Blasdruck geregelt wird. Zur Erfassung einer jeweiligen Rotationspositionierung des Blasrades wird ein Positionssensor verwendet.

Aufgabe der vorliegenden Erfindung ist es, ein Verfahren der einleitend genannten Art derart anzugeben, daß eine verbesserte Ansteuerung der Ventile erreicht werden kann.

Diese Aufgabe wird erfindungsgemäß dadurch gelöst, daß die Auswertungseinheit unabhängig von einem Bearbeitungszyklus einer zentralen Maschinensteuerung betrieben wird, daß mindestens zwei Vergleichern der Auswertungseinheit, die Sollwerte für die Ventilsteuerung mit Istwerten aus den Meßinformationen verknüpfen, die Meßinformationen relativ zueinander parallel und gleichzeitig zugeführt werden, daß die Vergleicher über Ausgangsstufen direkt auf die Ventile einwirken und daß unterschiedlichen Ventilen unterschiedliche Sollwerte für eine jeweilige Ansteuerung zugeordnet sowie die Sollwerte für die Ansteuerung der Ventile für jedes Ventil individuell ermittelt werden.

Weitere Aufgabe der vorliegenden Erfindung ist es, eine Vorrichtung der einleitend genannten Art derart zu konstruieren, daß die Herstellung von Behältern mit relativ zueinander identischen Materialverteilungen unterstützt wird.

Diese Aufgabe wird erfindungsgemäß dadurch gelöst, daß die Auswertungseinheit eine von einem Arbeitszyklus einer zentralen Maschinensteuerung unabhängige Arbeitsweise aufweist, daß die Auswertungseinheit mit mindestens zwei Vergleichern zur Verknüpfung von Ist-Signalen des Positionssensors und Sollwertvorgaben versehen ist, daß die Vergleicher relativ zueinander parallel an den Positionssensor angeschlossen sind, daß die Auswertungseinheit über Ausgangsstufen direkt mit den Ventilen verbunden ist und daß die Auswertungseinheit einen Speicher für Schaltpositionsvorgaben aufweist sowie unterschiedlichen Ventilen unterschiedliche Sollwertvorgaben derart zugeordnet sind, daß individuelle Schaltverzögerungen der einzelnen Ventile kompensiert sind.

Durch den Betrieb der Auswertungseinheit unabhängig vom Arbeitszyklus der zentralen Maschinensteuerung ist eine verzögerungsfreie bzw. zumindest verzögerungsarme Ansteuerung der Ventile möglich. Insbesondere wird auch eine sehr große Reproduktionsgenauigkeit bei mehreren aufeinander folgenden Ansteuerungen erreicht. Bei einer Verarbeitung der Meßsignale über die zentrale Maschinensteuerung vergehen im ungünstigem Fall zwei Bearbeitungszyklen, bis die anliegenden Meßinformationen ausgewertet und entsprechende Steuersignale zu den Ventilen übermittelt wurden. Bei einer von der zentralen Maschinensteuerung unabhängigen Verarbeitung entsteht lediglich eine Verzögerung, die durch die reine Verarbeitungszeit sowie entsprechende Schaltverzögerungen der Ventile verursacht wird. Bei bekannten Schaltverzögerungen der Ventile kann diese verzögerungszeit durch eine entsprechende Vorverlegung des Ansteuerzeitpunktes auch noch kompensiert werden.

Bei einer typischen Konstruktion sind auf einem Blasrad eine Mehrzahl von Blasstationen angeordnet, denen jeweils mehrere Ventile zugeordnet sind. Durch einen parallelen Anschluß aller Vergleicher an den Positionssensor wird unabhängig von den Schaltaktivitäten benachbarter Ventile oder benachbarter Blasstationen eine unmittelbare Aktivierung des jeweils betroffenen Ventils ermöglicht. Die direkte Kopplung der Auswertungseinheit über die Ausgangsstufen mit den Ventilen trägt ebenfalls zu einer kurzen resultierenden Schaltzeit bei.

Eine einfache Bedienungsstruktur wird dadurch bereitgestellt, daß die Auswertungseinheit über eine Datenschnittstelle mit der zentralen Maschinensteuerung gekoppelt wird.

Zur Unterstützung einer individuellen Einstellung in Abhängigkeit von der Gestaltung jeweils herzustellender Behälter wird vorgeschlagen, daß von der zentralen Maschinensteuerung Sollwerte zur Auswertungseinheit übertragen werden.

Eine Herstellung von Behältern mit relativ zueinander gleichmäßigen Materialverteilungen wird insbesondere dadurch erreicht, daß unterschiedlichen Ventilen unterschiedliche Sollwerte für eine jeweilige Ansteuerung zugeordnet werden.

Eine Adaption an konkrete Betriebsparameter erfolgt dadurch, daß die Sollwerte für die Ansteuerung der Ventile für jedes Ventil individuell ermittelt werden.

Ein vorteilhafter Steuerungsablauf besteht darin, daß vor einer Produktionsaufnahme das Blasrad mindestens einen Umlauf zur Ermittlung der Schaltsollwerte für die Ventile durchführt.

Zur Gewährleistung einer Berücksichtigung von sich zeitlich ändernden Parametern wird vorgeschlagen, daß bei einem Betrieb des Blasrades kontinuierlich aktuelle Schaltsollwerte für die Ventile unter Berücksichtigung von gemessenen Schaltverzögerungen ermittelt werden.

Ebenfalls ist daran gedacht, daß eine Adaption von Schaltsollwerten für die Ventile zu vorgebbaren Abgleichzeitpunkten durchgeführt wird.

Eine preiswerte und zugleich flexible Steuerung wird dadurch bereitgestellt, daß eine Sollwertvorgabe für die Schaltzeitpunkte der Ventile unter Verwendung eines Personal-Computers durchgeführt wird.

Zur Unterstützung einer Anpassung an unterschiedliche Anwendungsanforderungen wird vorgeschlagen, daß eine Systemsteuerung unter Verwendung eines Personal-Computers mit Einschüben zur Realisierung einer speicherprogrammierbaren Steuerung durchgeführt wird. Dies kann beispielsweise durch die Verwendung einer sogenannten Slot-SPS oder Soft-SPS erfolgen. Bei einer Soft-SPS erfolgt die Steuerung durch Software, die auf dem Personal-Computer abläuft.

Eine sehr einfache Bedienbarkeit wird dadurch unterstützt, daß die zentrale Maschinensteuerung eine Visualisierung aufweist.

Eine zweckmäßige Bedienungsstruktur wird dadurch bereitgestellt, daß die zentrale Maschinensteuerung Ausgänge zur Übermittlung von Sollwerten für die Druckzuführung zu den Blasstationen über die Ventile aufweist.

Ebenfalls ist daran gedacht, daß die zentrale Maschinensteuerung Ausgänge zur Übermittlung von Sollwerten für die Druckableitung zu den Blasstationen über die Ventile aufweist.

Eine modulare Systemstruktur wird auch dadurch unterstützt, daß Schaltpositionsvorgaben für die Auswertungseinheit von mindestens einem Modul der speicherprogrammierbaren Steuerung der zentralen Maschinensteuerung vorgegeben sind. Alternativ ist es auch möglich, daß die Schaltpositionsvorgaben von einer Verarbeitungseinheit im Bereich des Blasrades vorgegeben werden.

Zur Vorgabe von optimalen Steuerwinkeln während des Prozeßablaufes wird vorgeschlagen, daß unterschiedliche Steuerwinkel für die Druckversorgung jeder Blasstation im Hinblick auf einen Vorblasdruck, einen Hauptblasdruck und eine Druckableitung vorgesehen sind.

Eine weitere vorteilhafte konstruktive Realisierung besteht darin, daß die zentrale Maschinensteuerung sowohl mit analogen Eingängen als auch mit analogen Ausgängen verbunden ist.

Darüber hinaus erweist es sich als zweckmäßig, daß die zentrale Maschinensteuerung sowohl mit digitalen Eingängen als auch mit digitalen Ausgängen verbunden ist.

Zur Unterstützung einer schnellen Erkennung von Störungen wird vorgeschlagen, daß die Auswertungseinheit mit einem Ausgang zur Übermittlung von Fehlermeldungen an die zentrale Maschinensteuerung versehen ist.

Eine weitgehende Funktionsentkopplung zwischen der Auswertungseinheit und der zentralen Maschinensteuerung wird dadurch realisiert, daß die Auswertungseinheit einen Speicher für die Schaltpositionsvorgaben aufweist.

Ein schneller Datenaustausch wird dadurch unterstützt, daß die zentrale Maschinensteuerung über einen Bus mit der Auswertungseinheit verbunden ist.

Zur Unterstützung von Ferndiagnosen wird vorgeschlagen, daß die zentrale Maschinensteuerung mit einem Modem zur Datenübertragung ausgestattet ist.

Eine sehr flexible Steuerungsstruktur wird auch dadurch unterstützt, daß die speicherprogrammierbare Steuerung der zentralen Maschinensteuerung über eine OPC-Schnittstelle an das Bus-System angeschlossen ist.

Zur Unterstützung eines Datenaustausches mit dem rotierenden Blasrad wird vorgeschlagen, daß das Bus-System über mindestens eine elektrische Drehkupplung mit der Auswertungseinheit verbunden ist. Dies kann beispielsweise in der Form eines Drehverteilers mit Schleifring erfolgen. Alternativ ist auch die Verwendung einer Opto-Elektronik oder einer Funkstrecke möglich.

Eine digitale Verarbeitung wird dadurch unterstützt, daß der Positionssensor einen Generator für positionsabhängige Zählimpulse aufweist.

Zur Gewährleistung einer optimalen Kapazitätsausnutzung der Maschinensteuerung wird vorgeschlagen, daß die zentrale Maschinensteuerung eine interne Ablaufsteuerung aufweist, die mit unterschiedlichen Ansprechhäufigkeiten für unterschiedliche Steuerungsfunktionen versehen ist und bei der eine Heizungssteuerung relativ zu einer Blasradsteuerung mit einer geringeren Ansprechhäufigkeit und eine Ventilsteuerung relativ zu einer Blasradsteuerung mit höherer Ansprechhäufigkeit versehen ist. Eine derartige Betriebsweise kann über eine sogenannte Multitasking-Ablaufsteuerung erreicht werden.

Eine einfache Anschließbarkeit für unterschiedliche Funktionsbaugruppen wird dadurch bereitgestellt, daß die zentrale Maschinensteuerung mindestens ein offenes Bus-System aufweist.

Insbesondere ist daran gedacht, daß die zentrale Maschinensteuerung mit mindestens einem Feldbus-System versehen ist.

Eine Übertragung von großen Datenmengen wird dadurch erleichtert, daß die Visualisierung der zentralen Maschinensteuerung über einen PCI-Bus mit der speicherprogrammierbaren Steuerung verbunden ist. Alternativ ist auch eine Verbindung zwischen der Visualisierung und der bereits erwähnten Slot-SPS oder Soft-SPS möglich.

In den Zeichnungen sind Ausführungsbeispiele der Erfindung schematisch dargestellt. Es zeigen:
- Fig. 1: Eine perspektivische Darstellung einer Blasstation zur Herstellung von Behältern aus Vorformlingen,
- Fig. 2: einen Längsschnitt durch eine Blasform, in der ein Vorformling gereckt und expandiert wird,
- Fig. 3: eine Skizze zur Veranschaulichung eines grundsätzlichen Aufbaus einer Vorrichtung zur Blasformung von Behältern,
- Fig. 4: eine modifizierte Heizstrecke mit vergrößerter Heizkapazität,
- Fig. 5: ein stark vereinfachtes Blockschaltbild zur Veranschaulichung des Steuerungskonzeptes der gesamten Blasmaschine,
- Fig. 6: ein Blockschaltbild zur Veranschaulichung der Ventilsteuerung,
- Fig. 7: ein detaillierteres Blockschaltbild zur gesamten Maschinensteuerung und
- Fig. 8: Zeitdiagramme zur Veranschaulichung einer Kompensation von unterschiedlichen Ventilschaltzeiten.

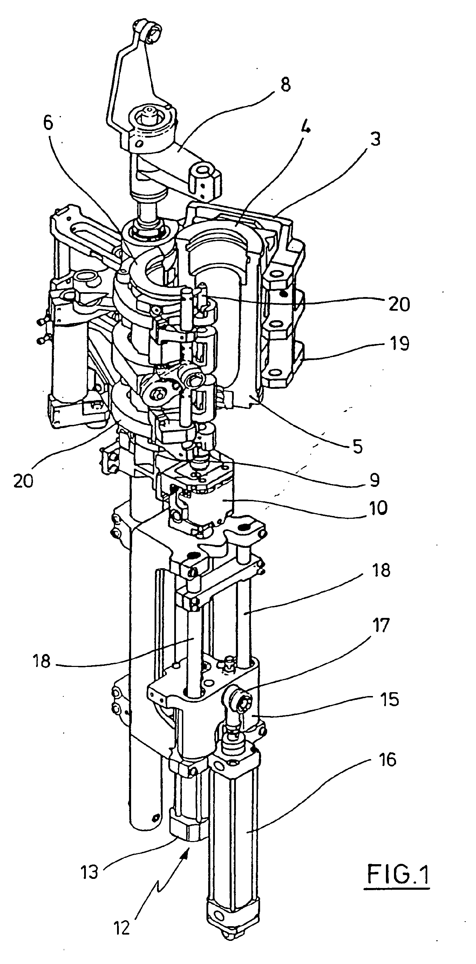

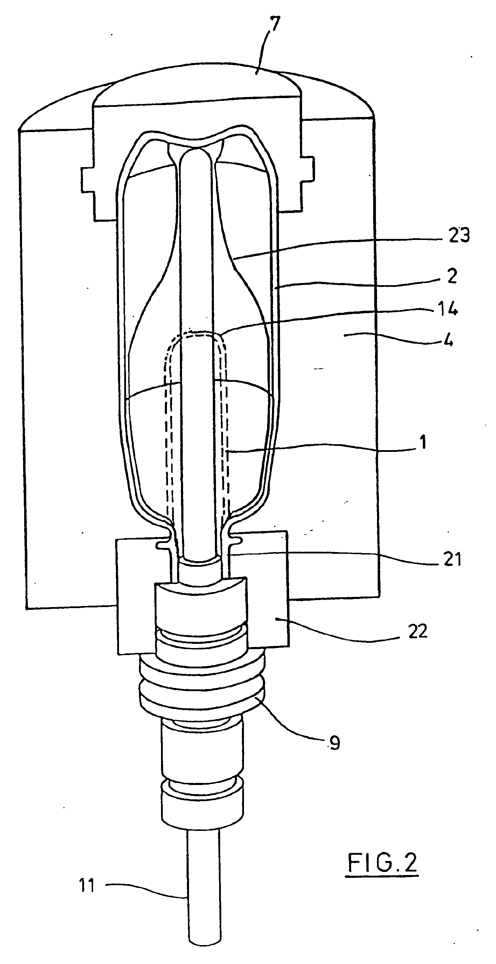

Eine Anwendung des Verfahrens und der Vorrichtung zur Steuerung des Blasvorganges kann beispielsweise zur Steuerung der Blasluftzuführung bei einer Vorrichtung zur Blasformung erfolgen. Der prinzipielle Aufbau einer Vorrichtung zur Umformung von Vorformlingen (1) in Behälter (2) ist in Fig. 1 und in Fig. 2 dargestellt.

Die Vorrichtung zur Formung des Behälters (2) besteht im wesentlichen aus einer Blasstation (3), die mit einer Blasform (4) versehen ist, in die ein Vorformling (1) einsetzbar ist. Der Vorformling (1) ist ein spritzgegossenes Teil aus Polyethylenterephthalat sein. Zur Ermöglichung eines Einsetzens des Vorformlings (1) in die Blasform (4) und zur Ermöglichung eines Herausnehmens des fertigen Behälters (2) besteht die Blasform (4) aus Formhälften (5, 6) und einem Bodenteil (7), das von einer Hubvorrichtung (8) positionierbar ist. Der Vorformling (1) kann im Bereich der Blasstation (3) von einem Transportdorn (9) gehalten sein, der gemeinsam mit dem Vorformling (1) eine Mehrzahl von Behandlungsstationen innerhalb der Vorrichtung durchläuft. Es ist aber auch möglich, den Vorformling (1) beispielsweise über Zangen oder andere Handhabungsmittel direkt in die Blasform (4) einzusetzen.

Zur Ermöglichung einer Druckluftzuleitung ist unterhalb des Transportdornes (9) ein Anschlußkolben (10) angeordnet, der dem Vorformling (1) Druckluft zuführt und gleichzeitig eine Abdichtung relativ zum Transportdorn (9) vornimmt. Bei einer abgewandelten Konstruktion ist es grundsätzlich aber auch denkbar, feste Druckluftzuleitungen zu verwenden. Eine Reckung des Vorformlings (1) erfolgt mit Hilfe einer Reckstange (11), die von einem Zylinder (12) positioniert wird. Grundsätzlich ist es aber auch denkbar, eine mechanische Positionierung der Reckstange (11) über Kurvensegmente durchzuführen, die von Abgriffrollen beaufschlagt sind. Die Verwendung von Kurvensegmenten ist insbesondere dann zweckmäßig, wenn eine Mehrzahl von Blasstationen (3) auf einem rotierenden Blasrad angeordnet sind. Eine Verwendung von Zylindern (12) ist zweckmäßig, wenn ortsfest angeordnete Blasstationen (3) vorgesehen sind.

Bei der in Fig. 1 dargestellten Ausführungsform ist das Recksystem derart ausgebildet, daß eine Tandem-Anordnung von zwei Zylindern (12) bereitgestellt ist. Von einem Primärzylinder (13) wird die Reckstange (11) zunächst vor Beginn des eigentlichen Reckvorganges bis in den Bereich eines Bodens (14) des Vorformlings (1) gefahren. Während des eigentlichen Reckvorganges wird der Primärzylinder (13) mit ausgefahrener Reckstange gemeinsam mit einem den Primärzylinder (13) tragenden Schlitten (15) von einem Sekundärzylinder (16) oder über eine Kurvensteuerung positioniert. Insbesondere ist daran gedacht, den Sekundärzylinder (16) derart kurvengesteuert einzusetzen, daß von einer Führungsrolle (17), die während der Durchführung des Reckvorganges an einer Kurvenbahn entlang gleitet, eine aktuelle Reckposition vorgegeben wird. Die Führungsrolle (17) wird vom Sekundärzylinder (16) gegen die Führungsbahn gedrückt. Der Schlitten (15) gleitet entlang von zwei Führungselementen (18).

Nach einem Schließen der im Bereich von Trägern (19, 20) angeordneten Formhälften (5, 6) erfolgt eine Verriegelung der Träger (19, 20) relativ zueinander mit Hilfe einer Verriegelungseinrichtung (20).

Zur Anpassung an unterschiedliche Formen eines Mündungsabschnittes (21) des Vorformlings (1) ist gemäß Fig. 2 die Verwendung separater Gewindeeinsätze (22) im Bereich der Blasform (4) vorgesehen.

Fig. 2 zeigt zusätzlich zum geblasenen Behälter (2) auch gestrichelt eingezeichnet den Vorformling (1) und schematisch eine sich entwickelnde Behälterblase (23).

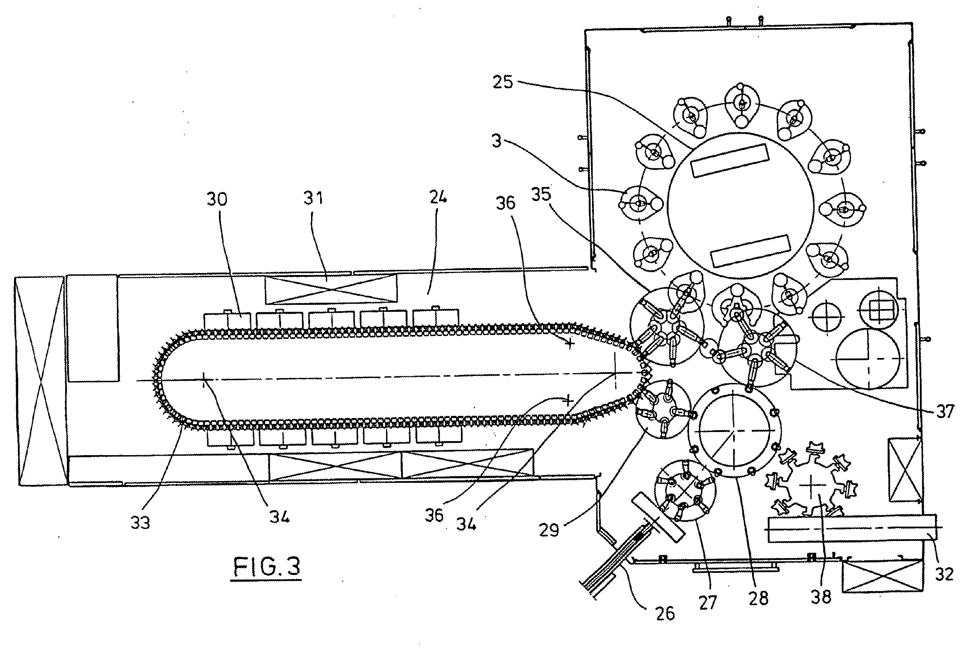

Fig. 3 zeigt den grundsätzlichen Aufbau einer Blasmaschine, die mit einer Heizstrecke (24) sowie einem rotierenden Blasrad (25) versehen ist. Ausgehend von einer Vorformlingseingabe (26) werden die Vorformlinge (1) von Übergaberädern (27, 28, 29) in den Bereich der Heizstrecke (24) transportiert. Entlang der Heizstrecke (24) sind Heizstrahler (30) sowie Gebläse (31) angeordnet, um die Vorformlinge (1) zu temperieren. Nach einer ausreichenden Temperierung der Vorformlinge (1) werden diese an das Blasrad (25) übergeben, in dessen Bereich die Blasstationen (3) angeordnet sind. Die fertig geblasenen Behälter (2) werden von weiteren Übergaberädern einer Ausgabestrecke (32) zugeführt.

Um einen Vorformling (1) derart in einen Behälter (2) umformen zu können, daß der Behälter (2) Materialeigenschaften aufweist, die eine lange Verwendungsfähigkeit von innerhalb des Behälters (2) abgefüllten Lebensmitteln, insbesondere von Getränken, gewährleisten, müssen spezielle Verfahrensschritte bei der Beheizung und Orientierung der Vorformlinge (1) eingehalten werden. Darüber hinaus können vorteilhafte Wirkungen durch Einhaltung spezieller Dimensionierungsvorschriften erzielt werden.

Als thermoplastisches Material können unterschiedliche Kunststoffe verwendet werden. Einsatzfähig sind beispielsweise PET, PEN oder PP.

Die Expansion des Vorformlings (1) während des Orientierungsvorganges erfolgt durch Druckluftzuführung. Die Druckluftzuführung ist in eine Vorblasphase, in der Gas, zum Beispiel Preßluft, mit einem niedrigen Druckniveau zugeführt wird und in eine sich anschließende Hauptblasphase unterteilt, in der Gas mit einem höheren Druckniveau zugeführt wird. Während der Vorblasphase wird typischerweise Druckluft mit einem Druck im Intervall von 10 bar bis 25 bar verwendet und während der Hauptblasphase wird Druckluft mit einem Druck im Intervall von 25 bar bis 40 bar zugeführt.

Aus Fig. 3 ist ebenfalls erkennbar, daß bei der dargestellten Ausführungsform die Heizstrecke (24) aus einer Vielzahl umlaufender Transportelemente (33) ausgebildet ist, die kettenartig aneinandergereiht und entlang von Umlenkrädern (34) geführt sind. Insbesondere ist daran gedacht, durch die kettenartige Anordnung eine im wesentlichen rechteckförmige Grundkontur aufzuspannen. Bei der dargestellten Ausführungsform werden im Bereich der dem Übergaberad (29) und einem Eingaberad (35) zugewandten Ausdehnung der Heizstrecke (24) ein einzelnes relativ groß dimensioniertes Umlenkrad (34) und im Bereich von benachbarten Umlenkungen zwei vergleichsweise kleiner dimensionierte Umlenkräder (36) verwendet. Grundsätzlich sind aber auch beliebige andere Führungen denkbar.

Zur Ermöglichung einer möglichst dichten Anordnung des Übergaberades (29) und des Eingaberades (35) relativ zueinander erweist sich die dargestellte Anordnung als besonders zweckmäßig, da im Bereich der entsprechenden Ausdehnung der Heizstrecke (24) drei Umlenkräder (34, 36) positioniert sind, und zwar jeweils die kleineren Umlenkräder (36) im Bereich der Überleitung zu den linearen Verläufen der Heizstrecke (24) und das größere Umlenkrad (34) im unmittelbaren Übergabebereich zum Übergaberad (29) und zum Eingaberad (35). Alternativ zur Verwendung von kettenartigen Transportelementen (33) ist es beispielsweise auch möglich, ein rotierendes Heizrad zu verwenden.

Nach einem fertigen Blasen der Behälter (2) werden diese von einem Entnahmerad (37) aus dem Bereich der Blasstationen (3) herausgeführt und über das Übergaberad (28) und ein Ausgaberad (38) zur Ausgabestrecke (32) transportiert.

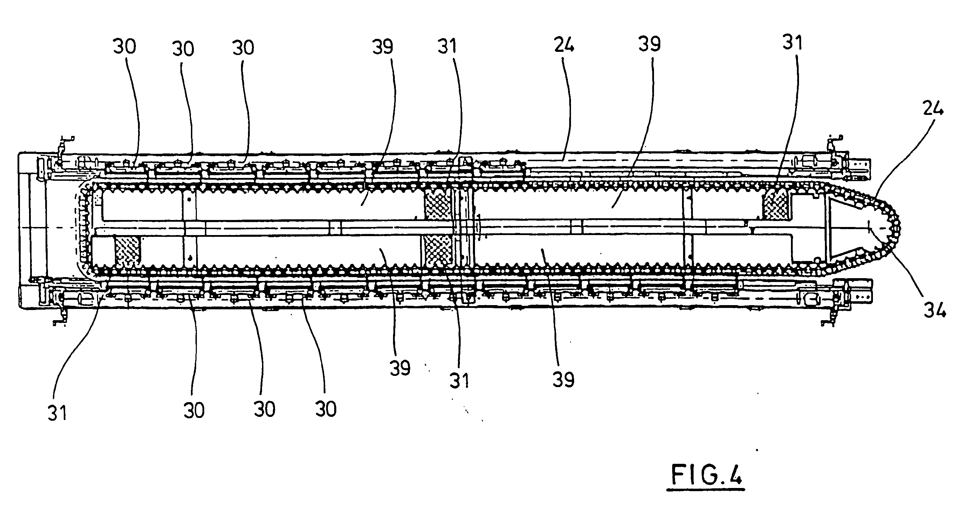

In der in Fig. 4 dargestellten modifizierten Heizstrecke (24) können durch die größere Anzahl von Heizstrahlern (30) eine größere Menge von Vorformlingen (1) je Zeiteinheit temperiert werden. Die Gebläse (31) leiten hier Kühlluft in den Bereich von Kühlluftkanälen (39) ein, die den zugeordneten Heizstrahlern (30) jeweils gegenüberliegen und über Ausströmöffnungen die Kühlluft abgeben. Durch die Anordnung der Ausströmrichtungen wird eine Strömungsrichtung für die Kühlluft im wesentlichen quer zu einer Transportrichtung der Vorformlinge (1) realisiert. Die Kühlluftkanäle (39) können im Bereich von den Heizstrahlern (30) gegenüberliegenden Oberflächen Reflektoren für die Heizstrahlung bereitstellen, ebenfalls ist es möglich, über die abgegebene Kühlluft auch eine Kühlung der Heizstrahler (30) zu realisieren.

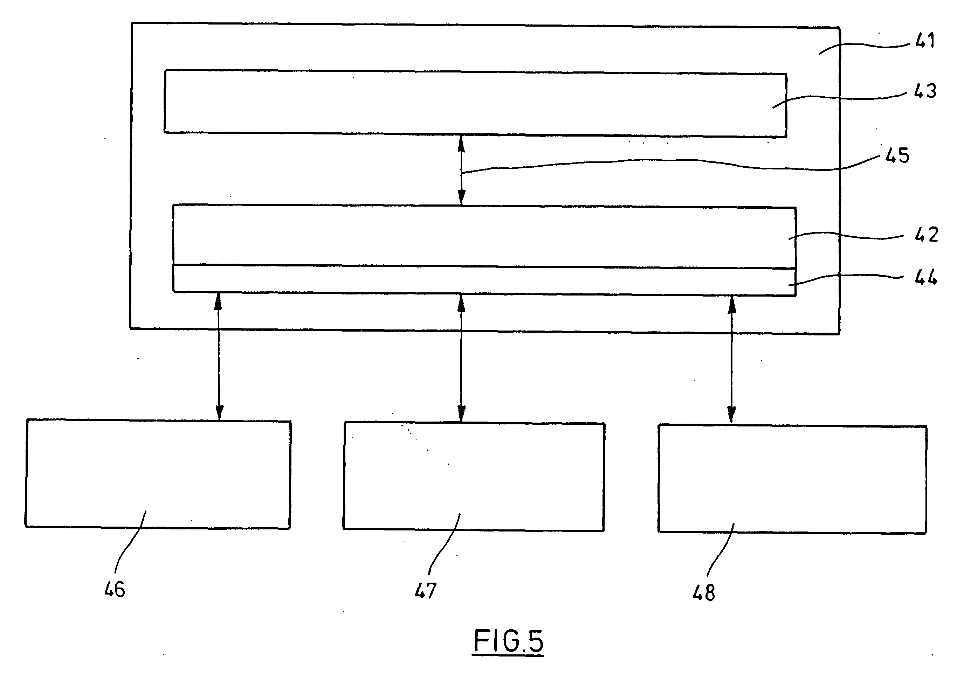

Fig. 5 zeigt das Grundprinzip der Steuerung einer Blasmaschine. Zur Durchführung einer allgemeinen Maschinensteuerung wird eine zentrale Maschinensteuerung (41) verwendet, die auf der Basis eines Personal-Computers für allgemeine Anwendungen realisiert ist. Die Hauptkomponenten der zentralen Maschinensteuerung (41) sind Einschubplatinen (42) für vorgebbare Steuerungskomponenten, eine Visualisierung (43) sowie eine Busschnittstelle (44). Eine Kopplung der Visualisierung (43) mit den Einschubplatinen (42) erfolgt über einen internen Bus (45).

Der interne Bus (45) kann beispielsweise als ein PCI-Bus realisiert sein. Die Einschubplatinen (42) können als Slot-SPS oder Soft-SPS realisiert werden. Bei der Realisierung der Busschnittstelle (44) ist insbesondere an die Verwendung einer OPC-Busschnittstelle gedacht. Als Personal-Computer kann beispielsweise ein PC mit einer graphischen Bedienoberfläche ähnlich zu einer Windows-Technik verwendet werden.

Räumlich getrennt zur zentralen Maschinensteuerung (41) sind im Bereich der Blasmaschine eine Heizungssteuerung (46), eine Schnittstelle (47) mit digitalen und / oder analogen Eingängen und Ausgängen sowie eine Blasradsteuerung (48) angeordnet.

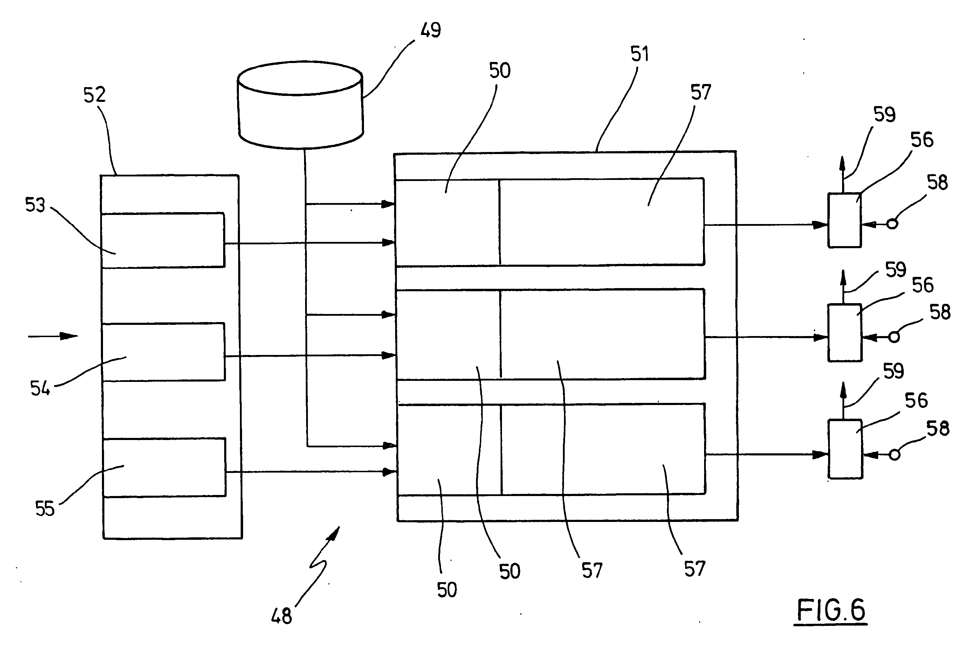

Fig. 6 zeigt in stärkerer Detailliertheit einen Teil der Blasradsteuerung (48). Diese Steuerungskomponente weist einen Positionssensor (49) zur Erfassung einer Rotationspositionierung des Blasrades (25) auf. Der Positionssensor (49) kann beispielsweise auf der Basis einer Strichcodescheibe realisiert sein. Meßinformationen des Positionssensors (49) werden relativ zueinander parallel Vergleichern (50) einer Auswertungseinheit (51) zugeführt. Die Vergleicher (50) erhalten zusätzlich zu den Meßinformationen des Positionssensors (49) Sollwertinformationen einer Sollwertvorgabe (52). Die Sollwertvorgabe (52) ist mit Speicherplätzen für einzelne Sollwertvorgaben, beispielsweise für einen Vorblasdruck (53), einen Hauptblasdruck (54) sowie eine Blasdruckableitung (55) versehen. Abgespeichert werden hier jeweils Positionsvorgaben für die entsprechende Druckzuschaltung oder Druckableitung, die mit den Positionsinformationen des Positionssensors (49) verglichen werden.

Grundsätzlich werden von der Sollwertvorgabe (52) jeweils zwei Schaltinformationen bereitgestellt, nämlich eine Positionsvorgabe für das Einschalten des jeweils zugeordneten Ventils (56) sowie eine weitere Positionsangabe für das Abschalten des zugeordneten Ventils (56). Eine Ansteuerung der Ventile (56) erfolgt über Ausgangsstufen (57) der Auswertungseinheit (51), die unmittelbar die Vergleicher (50) mit den Ventilen (56) verbinden. Die Ventile (56) sind typischerweise als elektromagnetisch gesteuerte Ventile realisiert, so daß eine elektrische Schaltinformation mit geringer Schaltzeit in eine jeweilige Ventilstellung umgesetzt werden kann.

Die Ventile (56) weisen typischerweise Druckeingänge (58) und Druckausgänge (59) auf, die jeweils mit den zu schaltenden Komponenten verbunden werden.

Die Daten für die Sollwertvorgabe (52) können über die Visualisierung (43) der zentralen Maschinensteuerung (41) bereitgestellt werden. Eine Abspeicherung zur Ermöglichung eines kontinuierlichen Soll-Ist-Vergleiches erfolgt aber im Bereich der Auswertungseinheit (51) und somit unabhängig vom Verarbeitungszyklus der zentralen Maschinensteuerung (41). Die Vergleicher (50) und die Ausgangsstufen (57) können beispielsweise als analoge Bauelemente realisiert sein. Grundsätzlich ist aber auch eine digitale Ausführung mit hoher Taktfrequenz möglich.

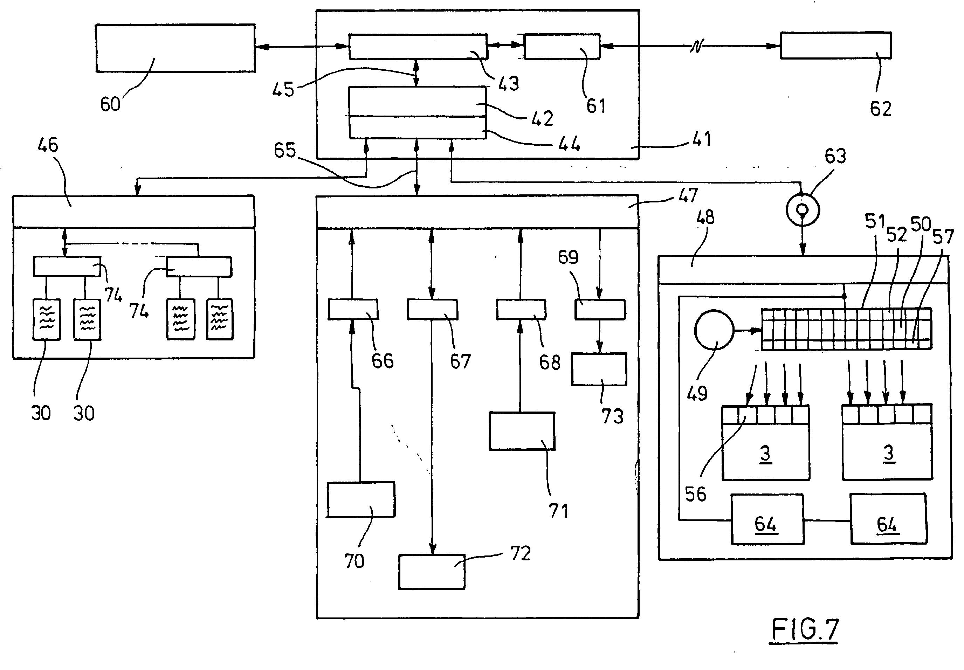

Fig. 7 zeigt den Aufbau der gesamten Steuerung der Blasmaschine als Blockschaltbild in einer stärker detaillierten Darstellung. Es ist insbesondere erkennbar, daß die zentrale Maschinensteuerung (41) an eine Betriebsdatenerfassung (60) angeschlossen ist, die den zeitlichen Verlauf einer Reihe von Betriebsparametern der Blasmaschine erfaßt. Darüber hinaus ist über ein Modem (61) eine Verbindung zu einem Servicemodem (62) hergestellt, das es ermöglicht, eine Ferndiagnose bei auftretenden Betriebsstörungen durchzuführen.

Die zentrale Maschinensteuerung (41) ist über eine elektrische Drehkupplung (63), die beispielsweise als Schleifringanordnung ausgebildet sein kann, mit der Blasradsteuerung (48) verbunden. Grundsätzlich ist aber auch die Verwendung kontaktloser Kopplungen, beispielsweise über eine Infrarot-Strecke oder über Funk-Übertragung, möglich.

Die Ausgangstufen (57) der Auswertungseinheit (51) sind an die Ventile (56) der Blasstation (3) angeschlossen. Die Blasradsteuerung (48) kann ebenfalls eine Ansteuerung für Servoantriebe (64) der Reckstangen (11) umfassen.

Die Schnittstelle (47) für die Maschinensteuerung ist über einen Bus (65), der insbesondere als ein Feldbus ausgebildet sein kann, an die Busschnittstelle (44) der zentralen Maschinensteuerung (41) angeschlossen. Die Schnittstelle (47) ist mit digitalen Eingängen (66), digitalen Ausgängen (67), analogen Eingängen (68) sowie analogen Ausgängen (69) versehen. An die digitalen Eingänge (66) sind typischerweise digitale Meldeglieder (70) angeschlossen, die für Überwachungen, die Erfassung des Maschinenzustandes sowie als Endschalter realisiert sein können. Die analogen Eingänge (68) dienen zum Anschluß von analogen Meldegliedern (71), die beispielsweise als Pyrometer, als Druckaufnehmer, als Temperaturfühler für verwendete Lüfter, als Temperaturfühler für eine Kühlwassertemperatur oder als Temperaturfühler für Heizkanäle ausgebildet sein können.

An die digitalen Ausgänge (67) können Verbraucher (72) mit digitalen Eingängen angeschlossen sein, beispielsweise Ventile, Anzeigen, Relais oder Schütze. Die analogen Ausgänge dienen zum Anschluß von analogen Stellgliedern (73), beispielsweise für den Vorblasdruck, den Hauptblasdruck, den Reckdruck bei pneumatischen Recksystemen, die Kühlwassertemperatur oder die Vorformlingskühlung.

Die Heizungssteuerung (46) umfaßt Leistungsteile (74) zur Ansteuerung der Heizstrahler (30). Die Heizstrahler können als IR-Strahler, HF-Strahler oder Mikrowellen-Generatoren realisiert sein.

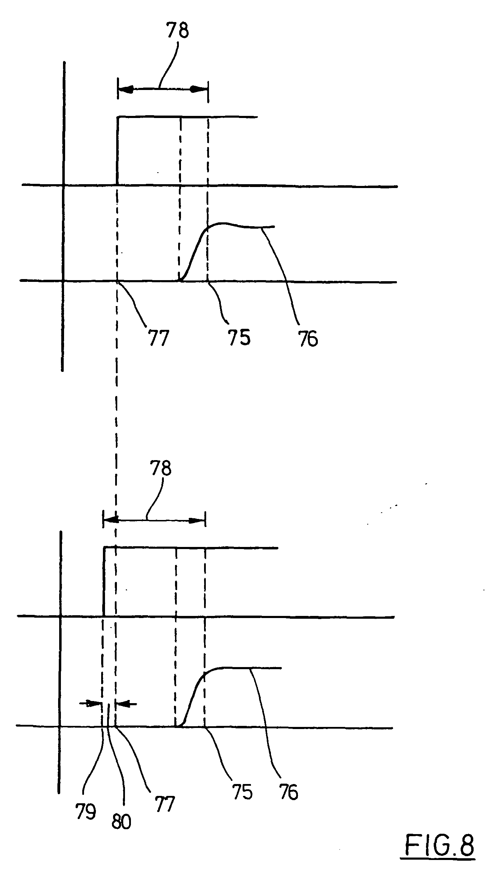

Zur Unterstützung einer optimalen Ansteuerung der Ventile (56) ist insbesondere daran gedacht, mit Hilfe von Drucksensoren das konkrete Schaltverhalten der einzelnen Ventile (56) zu erfassen. Hierdurch kann individuell die Schaltzeit zwischen einem den Schaltvorgang des Ventils auslösenden Eingangssignal der Auswertungseinheit (51) und einem tatsächlichen Schaltvorgang des Ventils (56) erfaßt werden. Diese individuellen Schaltzeiten können derart abgespeichert und berücksichtigt werden, daß der tatsächliche Schaltvorgang an den Ventilen (56) exakt zum vorgesehenen Zeitpunkt stattfindet. Konkret wird dies gemäß dem Diagramm in Fig. 8 dadurch erreicht, daß gegenüber einem Einschaltzeitpunkt (75), zu dem ein Druckverlauf (76) am Ventil (56) einen vorgegebenen Wert erreicht haben soll, ein Startwert (77) im Bereich der Sollwertvorgabe (52) derart definiert wird, daß unter Berücksichtigung einer konkreten Schaltzeit (78) der zu erreichende Druckwert am Einschaltzeitpunkt (75) auch vorliegt. Bei einem in Fig. 8 im unteren Bereich dargestellten Schaltungsverlauf für ein zweites Ventil mit individueller größerer Schaltzeit (78) wird ein Korrekturstartwert im Bereich der Sollwertvorgabe (52) gewählt, der auch für dieses Ventil (56) die korrekte Einhaltung des Einschaltzeitpunktes (75) gewährleistet. Die Schaltzeit (78) in den beiden dargestellten Diagrammen differieren um eine Ventiltoleranz (80).

Die jeweiligen ventilspezifischen Startwerte (77) bzw. Korrekturstartwerte (79) können gemäß einem typischen Verfahrensablauf derart bestimmt werden, daß zunächst eine Umdrehung des Blasrades mit der Erfassung der ventilspezifischen Zeitverzögerungen (78) durchgeführt wird. In Abhängigkeit von diesen Schaltzeiten (78) erfolgt eine Definition der Startwerte im Bereich der Sollwertvorgabe (52). Permanent während des Betriebes der Blasmaschine oder in zyklischen Abständen kann erneut eine Bestimmung der individuellen Schaltzeiten (78) durchgeführt werden, um Änderungen, beispielsweise aufgrund einer Erwärmung der Ventile (56) oder aufgrund einer Änderung sonstiger Betriebsparameter zu erfassen. Es kann somit auch eine Kompensation der Schaltverzögerungen (78) bei sich ändernden Betriebsparametern gewährleistet werden. Der gesamte Vorgang kann vollautomatisch durchgeführt werden, so daß für einen Betreiber der Maschine keine zusätzlichen Bedienvorgänge erforderlich sind.

Für eine ausreichende Kompensation der unterschiedlichen Schaltzeiten (78) der Ventile (56) erweist es sich in der Regel als ausreichend, wenn der Positionssensor (49) die Meßinformationen zur Rotationspositionierung des Blasrades (25) mit einer Auflösung von etwa einem Zehntel Grad liefert.

Die Auswertungseinheit (51) zur Vorgabe der individuellen Schaltzeiten (78) der Ventile (56) kann beispielsweise als ein sogenanntes elektronisches Nockenschaltwerk ausgebildet sein. Ebenfalls ist es möglich, eine interruptfähige SPS-Steuerung oder eine sonstige programmierbare Steuerung einzusetzen. Bei der Verwendung einer interruptfähigen SPS-Steuerung wird bei der Erfassung eines Gradwechsels im Hinblick auf die Rotationspositionierung des Blasrades das übergeordnete SPS-Ablaufprogramm unterbrochen und eine Interrupt-Routine für die Berechnung der Schaltzeiten (78) der Ventile (56) aktiviert. In dieser Interrupt-Routine werden die für die Geschwindigkeit und Genauigkeit der Schaltung der Ventile (56) erforderlichen Funktionen zur Durchführung der Sollwert-Istwert-Vergleiche abgearbeitet.

Nach einer Beendigung der Interrupt-Routine wird in das übergeordnete Ablaufprogramm zurückgesprungen und die dort aktivierten Programmteile werden weiter bearbeitet. Durch die Verwendung derartiger Interrupt-Steuerungen können sehr schnelle Zykluszeiten für die Vergleicherfunktionen realisiert werden, die im Bereich von einigen Mikrosekunden liegen.

## Patentansprüche

1. verfahren zur Steuerung eines Blasvorganges, bei dem auf einem rotierenden Blasrad (25) angeordneten Blasstationnen (3) zur Blasverformung von spritzgegossenen thermoplastischen Vorformlingen (1) in Behälter (2) mindestens ein unter Druck stehendes Blasfluid zugeführt wird und bei dem mindestens zeitweilig eine aktuelle Rotationspositionierung des Blasrades (25) meßtechnisch erfaßt sowie die entspreChenden Meßinformationen von einer Auswertungseinheit (51) mit Schaltpositionsvorgaben für die Zufuhr und Ableitung des Blasfluids verglichen werden, wobei die Auswertungseinheit (51) unabhängig von einem Bearbeitungszyklus einer zentralen Maschinensteuerung (41) betrieben wird, mindestens zwei Vergleichern (50) der Auswertungseinheit (51), die Sollwerte für die Ventilsteuerung mit Istwerten aus den Meßinformationen verknüpfen, die Meßinformationen relativ zueinander parallel und gleichzeitig zugeführt werden, und die Vergleicher (50) über Ausgangsstufen (57) direkt auf die Ventile (56) einwirken, **dadurch gekennzeichnet, daß** unterschiedlichen Ventilen (56) unterschiedliche Sollwerte für eine jeweilige Ansteuerung zugeordnet sowie die Sollwerte für die Ansteuerung der Ventile (56) für jedes Ventil (56) individuell ermittelt werden.

2. Verfahren nach Anspruch 1, **dadurch gekennzeichnet, daß** die Auswertungseinheit (51) über eine Datenschnittstelle mit der zentralen Maschinensteuerung (41) gekoppelt wird.

3. Verfahren nach Anspruch 1 oder 2, **dadurch gekennzeichnet, daß** von der zentralen Maschinensteuerung (41) Sollwerte zur Auswertungseinheit (51) übertragen werden.

4. Verfahren nach einem der Ansprüche 1 bis 3, **dadurch gekennzeichnet, daß** vor einer Produktionsaufnahme das Blasrad (25) mindestens einen Umlauf zur Ermittlung der Schaltsollwerte für die Ventile (56) durchführt.

5. Verfahren nach einem der Ansprüche 1 bis 4, **dadurch gekennzeichnet, daß** bei einem Betrieb des Blasrades (25) kontinuierlich aktuelle Schaltsollwerte für die Ventile (56) unter Berücksichtigung von gemessenen Schaltverzögerungen ermittelt werden.

6. Verfahren nach einem der Ansprüche 1 bis 4, **dadurch gekennzeichnet, daß** eine Adaption von Schaltsollwerten für die Ventile (56) zu vorgebbaren Abgleichzeitpunkten durchgeführt wird.

7. Verfahren nach einem der Ansprüche 1 bis 6, **dadurch gekennzeichnet, daß** eine Sollwertvorgabe für die Schaltzeitpunkte der Ventile (56) unter Verwendung eines Personal-Computers durchgeführt wird.

8. Verfahren nach einem der Ansprüche 1 bis 7, **dadurch gekennzeichnet, daß** eine Systemsteuerung unter Verwendung eines Personal-Computers mit Einschüben zur Realisierung einer speicherprogrammierbaren Steuerung durchgeführt wird.

9. Vorrichtung zur Steuerung eines Blasvorganges zur Behälterformung aus spritzgegossenen Vorformlingen (1), die mindestens ein steuerbares ventil (56) aufweist, das im Bereich einer Zuführleitung für ein Blasfluid angeordnet ist und bei der die Zuführleitung eine Blasfluidversorgung mit mindestens einer Blasstation (3) verbindet, die auf einem rotierenden Blasrad (25) angeordnet ist und die mit einer Meßwerterfassung sowie mit mindestens einem Positionssensor (49) zur Erfassung einer Rotationspositionierung des Blasrades (25) versehen ist, sowie bei der die Meßwerterfassung mit einer Auswertungseinheit (51) zur Schaltung der Ventile (56) verbunden ist, wobei die Auswertungseinheit (51) eine von einem Arbeitszyklus einer zentralen Maschinensteuerung (41) unabhängige Arbeitsweise aufweist, die Auswertungseinheit (51) mit mindestens zwei Vergleichern (50) zur Verknüpfung von Ist-Signalen des Positionssensors (49) und Sollwertvorgaben (52) versehen ist, die Vergleicher (50) relativ zueinander parallel an den Positionssensor (49) angeschlossen sind, unddie Auswertungseinheit (51) über Ausgangsstufen (57) direkt mit den Ventilen (56) verbunden ist, **dadurch gekennzeichnet, daß** die Auswertungseinheit (51) einen Speicher für Schaltpositionsvorgaben aufweist sowie unterschiedlichen Ventilen (56) unterschiedliche Sollwertvorgaben derart zugeordnet sind, daß individuelle Schaltverzögerungen der einzelnen Ventile (56) kompensiert sind.

10. Vorrichtung nach Anspruch 9, **dadurch gekennzeichnet, daß** die zentrale Maschinensteuerung (41) zur Unterstützung von Sollwertvorgaben (52) einen Personal-Computer aufweist.

11. Vorrichtung nach einem der Ansprüche 9 oder 10, **dadurch gekennzeichnet, daß** der Personal-Computer Einschübe zur Realisierung von Komponenten einer speicherprogrammierbaren Steuerung aufweist.

12. Vorrichtung nach einem der Ansprüche 9 bis 11, **dadurch gekennzeichnet, daß** die zentrale Maschinensteuerung (41) eine Visualisierung (43) aufweist.

13. Vorrichtung nach einem der Ansprüche 9 bis 12, **dadurch gekennzeichnet, daß** die zentrale Maschinensteuerung (41) Ausgänge zur Übermittlung von Sollwerten für die Druckzuführung zu den Blasstationen (3) über die Ventile (56) aufweist.

14. Vorrichtung nach einem der Ansprüche 9 bis 13, **dadurch gekennzeichnet, daß** die zentrale Maschinensteuerung (41) Ausgänge zur Übermittlung von Sollwerten für die Druckableitung zu den Blasstationen (3) über die Ventile (56) aufweist.

15. Vorrichtung nach einem der Ansprüche 9 bis 14, **dadurch gekennzeichnet, daß** Schaltpositionsvorgaben für die Auswertungseinheit (51) von mindestens einem Modul der speicherprogrammierbaren Steuerung der zentralen Maschinensteuerung (41) vorgegeben sind.

16. Vorrichtung nach einem der Ansprüche 9 bis 15, **dadurch gekennzeichnet, daß** unterschiedliche Steuerwinkel für die Druckversorgung jeder Blasstation (3) im Hinblick auf einen Vorblasdruck, einen Hauptblasdruck und eine Druckableitung vorgesehen sind.

17. Vorrichtung nach einem der Ansprüche 9 bis 16, **dadurch gekennzeichnet, daß** die zentrale Maschinensteuerung (41) sowohl mit analogen Eingängen (68) als auch mit analogen Ausgängen (69) verbunden ist.

18. Vorrichtung nach einem der Ansprüche 9 bis 17, **dadurch gekennzeichnet, daß** die zentrale Maschinensteuerung (41) sowohl mit digitalen Eingängen (66) als auch mit digitalen Ausgängen (67) verbunden ist.

19. Vorrichtung nach einem der Ansprüche 9 bis 18, **dadurch gekennzeichnet, daß** die Auswertungseinheit (51) mit einem Ausgang zur Übermittlung von Fehlermeldungen an die zentrale Maschinensteuerung (41) versehen ist.

20. Vorrichtung nach einem der Ansprüche 9 bis 19, **dadurch gekennzeichnet, daß** die zentrale Maschinensteuerung (41) über einen Bus mit der Auswertungseinheit (51) verbunden ist.

21. Vorrichtung nach einem der Ansprüche 9 bis 20, **dadurch gekennzeichnet, daß** die zentrale Maschinensteuerung (41) mit einem Modem (61) zur Datenübertragung ausgestattet ist.

22. Vorrichtung nach einem der Ansprüche 9 bis 21, **dadurch gekennzeichnet, daß** die speicherprogrammierbare Steuerung der zentralen Maschinensteuerung (41) über eine OPC-Schnittstelle an das Bus-System angeschlossen ist.

23. Vorrichtung nach einem der Ansprüche 9 bis 22, **dadurch gekennzeichnet, daß** das Bus-System über mindestens eine elektrische Drehkupplung (63) mit der Auswertungseinheit (51) verbunden ist.

24. Vorrichtung nach einem der Ansprüche 9 bis 23, **dadurch gekennzeichnet, daß** der Positionssensor (49) einen Generator für positionsabhängige zählimpulse aufweist.

25. Vorrichtung nach einem der Ansprüche 9 bis 24, **dadurch gekennzeichnet, daß** die zentrale Maschinensteuerung (41) eine interne Ablaufsteuerung aufweist, die mit unterschiedlichen Ansprechhäufigkeiten für unterschiedliche Steuerungsfunktionen versehen ist und bei der eine Heizungssteuerung (46) relativ zu einer Blasradsteuerung (48) mit einer geringeren Ansprechhäufigkeit und eine Ventilsteuerung relativ zu einer Blasradsteuerung (48) mit höherer Ansprechhäufigkeit versehen ist.

26. Vorrichtung nach einem der Ansprüche 9 bis 25, **dadurch gekennzeichnet, daß** die zentrale Maschinensteuerung (41) mindestens ein offenes Bus-System aufweist.

27. Vorrichtung nach einem der Ansprüche 9 bis 26, **dadurch gekennzeichnet, daß** die zentrale Maschinensteuerung (41) mit mindestens einem Feldbus-System versehen ist.

28. Vorrichtung nach einem der Ansprüche 9 bis 27, **dadurch gekennzeichnet, daß** die Visualisierung (43) der zentralen Maschinensteuerung (41) über einen PCI-Bus mit der speicherprogrammierbaren Steuerung verbunden ist.

## Claims

1. Method of controlling a blowing process whereby at least one blowing fluid placed under pressure is delivered to blowing stations (3) disposed on a rotating blowing wheel (25) for blow moulding injection-moulded thermoplastic preforms (1) into containers (2) and whereby an instantaneous rotational positioning of the blowing wheel (25) is detected at least transiently on the basis of a measuring process, and the corresponding measurement data is compared with pre-set switch positions for introducing and discharging the blowing fluids by an evaluation unit (51), and the evaluation unit (51) is operated independently of a processing cycle of a central machine controller (41), and at least two comparators (50) of the evaluation unit (51) correlate the desired value for the valve control system with actual values from the measurement data, and the measurement data sets are applied in parallel and simultaneously relative to one another, and the comparators (50) act directly on the valves (56) via output stages (57), **characterised in that** different valves (56) are assigned different desired values for a respective activation and the desired values for activating the valves (56) are determined individually for every valve (56).

2. Method as claimed in claim 1, **characterised in that** the evaluation unit (51) is coupled with the central machine controller (41) via a data interface.

3. Method as claimed in claim 1 or 2, **characterised in that** desired values are transmitted to the evaluation unit (51) by the central machine controller (41).

4. Method as claimed in one of claims 1 to 3, **characterised in that** the blowing wheel (25) effects at least one revolution in order to determine the switch desired values for the valves (56) prior to a production run.

5. Method as claimed in one of claims 1 to 4, **characterised in that** when the blowing wheel (25) is operating, continuous instantaneous switch desired values for the valves (56) are determined taking account of measured switching delays.

6. Method as claimed in one of claims 1 to 4, **characterised in that** an adaptation of switch desired values for the valves (56) is run at pre-settable adaptation times.

7. Method as claimed in one of claims 1 to 6, **characterised in that** a desired value pre-setting routine for the switching times of the valves (56) is run using a personal computer.

8. Method as claimed in one of claims 1 to 7, **characterised in that** a system control is run using a personal computer with slots for running a memory-programmable control system.

9. Device for controlling a blowing process for moulding containers from injection moulded preforms (1), which has at least one controllable valve (56) disposed in the region of an inlet line for a blowing fluid, and the inlet line connects a blowing fluid supply to at least one blowing station (3) disposed on a rotating blowing wheel (25), and which is provided with a measurement value detection system and at least one position sensor (49) for detecting a rotational positioning of the blowing wheel (25), and the measurement value detection system is connected to an evaluation unit (51) for switching the valves (56), and the evaluation unit (51) has an operating mode which is independent of an operating cycle of a central machine controller (41), and the evaluation unit (51) is provided with at least two comparators (50) for correlating actual signals of the position sensor (49) and pre-set desired values (52), and the comparators (50) are connected to the position sensor (49) in parallel relative to one another and the evaluation unit (51) is connected to the valves (56) directly via output stages (57), **characterised in that** the evaluation unit (51) has a memory for pre-set switch positions, and different pre-set desired values are assigned to different valves (56) so that individual switching delays of the individual valves (56) are compensated.

10. Device as claimed in claim 9, **characterised in that** the central machine controller (41) has a personal computer for assisting the setting of desired values (52).

11. Device as claimed in one of claims 9 or 10, **characterised in that** the personal computer has slots for accommodating components of a memory-programmable control system.

12. Device as claimed in one of claims 9 to 11, **characterised in that** the central machine controller (41) has a display (43).

13. Device as claimed in one of claims 9 to 12, **characterised in that** the central machine controller (41) has outputs for transmitting desired values for delivering pressure to the blowing stations (3) via the valves (56).

14. Device as claimed in one of claims 9 to 13, **characterised in that** the central machine controller (41) has outputs for transmitting desired values for relieving the blowing stations (3) of pressure via the valves (56).

15. Device as claimed in one of claims 9 to 14, **characterised in that** the pre-set switch positions for the evaluation unit (51) are pre-set by at least one module of the memory programmable control system of the central machine controller (41).

16. Device as claimed in one of claims 9 to 15, **characterised in that** different control angles are provided for the pressure supply of every blowing station (3) with a view to obtaining a pre-blowing pressure, a main blowing pressure and a pressure relief.

17. Device as claimed in one of claims 9 to 16, **characterised in that** the central machine controller (41) is connected both to analogue inputs (68) and analogue outputs (69).

18. Device as claimed in one of claims 9 to 17, **characterised in that** the central machine controller (41) is connected both to digital inputs (66) and digital outputs (67).

19. Device as claimed in one of claims 9 to 18, **characterised in that** the evaluation unit (51) is provided with an output for transmitting error messages to the central machine controller (41).

20. Device as claimed in one of claims 9 to 19, **characterised in that** the central machine controller (41) is connected to the evaluation unit (51) via a bus.

21. Device as claimed in one of claims 9 to 20, **characterised in that** the central machine controller (41) is equipped with a modem (61) for transmitting data.

22. Device as claimed in one of claims 9 to 21, **characterised in that** the memory programmable control system of the central machine controller (41) is connected to the bus system via an OPC interface.

23. Device as claimed in one of claims 9 to 22, **characterised in that** the bus system is connected to the evaluation unit (51) via at least one electric rotary coupling (63).

24. Device as claimed in one of claims 9 to 23, **characterised in that** the position sensor (49) has a generator for position-dependent counting pulses.

25. Device as claimed in one of claims 9 to 24, **characterised in that** the central machine controller (41) has an internal sequence controller which is provided with different actuation frequencies for different control functions, and a heating control system (46) is provided with a lower actuation frequency than a blowing wheel control system (48) and a valve control system is provided with a higher actuation frequency than a blowing wheel control system (48).

26. Device as claimed in one of claims 9 to 25, **characterised in that** the central machine controller (41) has at least one open bus system.

27. Device as claimed in one of claims 9 to 26, **characterised in that** the central machine controller (41) is provided with at least one field bus system.

28. Device as claimed in one of claims 9 to 27, **characterised in that** the display (43) of the central machine controller (41) is connected to the memory programmable control system via a PCI bus.

## Revendications

1. Procédé de commande d'une opération de soufflage, dans lequel au moins un fluide de soufflage sous pression est amené à des postes de soufflage (3) disposés sur une roue rotative de soufflage (25), pour souffler des ébauches (1) en matière thermoplastique moulée par injection en récipients (2) et dans lequel au moins à certains moments, la position effective en rotation de la roue de soufflage (25) est déterminée par mesure et les informations de mesure correspondantes sont comparées par une unité d'évaluation (51) à des positions de consigne de commutation d'amenée et d'évacuation du fluide de soufflage, l'unité d'évaluation (51) fonctionnant indépendamment du cycle de travail d'une commande centrale de machine (41), au moins deux comparateurs (50) de l'unité d'évaluation (51) associant des valeurs de consigne de la commande de soupapes à des valeurs effectives à partir des informations de mesure, les informations de mesure étant amenées parallèlement les unes aux autres et simultanément et les comparateurs (50) agissant directement sur les soupapes (56) par des étages de sortie (57), **caractérisé en ce que** différentes valeurs de consigne sont associées aux différentes soupapes (56) en vue de leur commande particulière et **en ce que** les valeurs de consigne pour la commande des soupapes (56) sont déterminées séparément pour chaque soupape (56).

2. Procédé selon la revendication 1, **caractérisé en ce que** l'unité d'évaluation (51) est couplée à la commande centrale de machine (41) par une interface de données.

3. Procédé selon les revendications 1 ou 2, **caractérisé en ce que** des valeurs de consigne sont transmises à l'unité d'évaluation (51) par la commande centrale de machine (41).

4. Procédé selon l'une des revendications 1 à 3, **caractérisé en ce qu'**avant un lot de production, la roue de soufflage (25) exécute au moins une rotation pour déterminer les valeurs de consigne de commutation des soupapes (56).

5. Procédé selon l'une des revendications 1 à 4, **caractérisé en ce que**, lorsque la roue de soufflage (25) fonctionne, les valeurs de consigne de commutation actualisées en continu des soupapes (56) sont déterminées en tenant compte des retards de commutation mesurés.

6. Procédé selon l'une des revendications 1 à 4, **caractérisé en ce que** les valeurs de consigne de commutation des soupapes (56) sont adaptées à des instants de compensation prédéterminés.

7. Procédé selon l'une des revendications 1 à 6, **caractérisé en ce que** des valeurs de consigne définies des instants de commutation des soupapes (56) sont définies à l'aide d'un ordinateur personnel.

8. Procédé selon l'une des revendications 1 à 7, **caractérisé en ce que** la commande du système est réalisée en utilisant un ordinateur personnel doté de périphériques qui permettent de réaliser une commande programmable conservée en mémoire.

9. Dispositif de commande de l'opération de soufflage pour la formation de récipients à partir d'ébauches (1) moulées par injection, lequel dispositif présente au moins une soupape asservie (56) disposée dans la zone d'un conduit d'amenée d'un fluide de soufflage et dans lequel le conduit d'amenée relie l'alimentation en fluide de soufflage à au moins un poste de soufflage (3) disposé sur une roue rotative de soufflage (25) et dotée d'un système de détermination de valeurs de mesure ainsi que d'au moins un détecteur de position (49) qui détecte la position en rotation de la roue de soufflage (25), et dans lequel le système de détection des valeurs de mesure est relié à une unité d'évaluation (51) pour la commutation des soupapes (56), l'unité d'évaluation (51) présentant un mode de fonctionnement indépendant du cycle de travail d'une commande centrale de machine (41), l'unité d'évaluation (51) étant dotée d'au moins deux comparateurs (50) qui relient des signaux effectifs du détecteur de position (49) à des valeurs de consigne (52), les comparateurs (50) étant raccordés en parallèle l'un à l'autre au détecteur de position (49) et l'unité d'évaluation (51) étant reliée directement aux soupapes (56) par l'intermédiaire d'étages de sortie (57), **caractérisé en ce que** l'unité d'évaluation (51) présente une mémoire des positions de consigne de commutation et **en ce que** différentes soupapes (56) sont associées à différentes valeurs de consigne de manière à pouvoir compenser les retards de commutation des différentes soupapes (56).

10. Dispositif selon la revendication 9, **caractérisé en ce que** la commande centrale de machine (41) présente un ordinateur personnel qui permet d'introduire les valeurs de consigne (52).

11. Dispositif selon l'une des revendications 9 ou 10, **caractérisé en ce que** l'ordinateur personnel présente des périphériques qui permettent de réaliser des composants d'une commande programmable conservée en mémoire.

12. Dispositif selon l'une des revendications 9 à 11, **caractérisé en ce que** la commande centrale de machine (41) présente un système de visualisation (43).

13. Dispositif selon l'une des revendications 9 à 12, **caractérisé en ce que** la commande centrale de machine (41) présente des sorties permettant d'envoyer des valeurs de consigne de l'apport sous pression aux postes de soufflage (3) par l'intermédiaire des soupapes (56).

14. Dispositif selon l'une des revendications 9 à 13, **caractérisé en ce que** la commande centrale de machine (41) présente des sorties qui permettent de transmettre les valeurs de consigne du délestage de pression au poste de soufflage (3) par l'intermédiaire des soupapes (56).

15. Dispositif selon l'une des revendications 9 à 14, **caractérisé en ce que** des valeurs de consigne de position de commutation destinées à l'unité d'évaluation (51) sont définies par au moins un module de la commande programmable conservée en mémoire dans la commande centrale de machine (41).

16. Dispositif selon l'une des revendications 9 à 15, **caractérisé en ce que** différents angles de commande pour l'alimentation en pression de chaque poste de soufflage (3) sont prévus pour la pression de présoufflage, la pression principale de soufflage et le délestage de la pression.

17. Dispositif selon l'une des revendications 9 à 16, **caractérisé en ce que** la commande centrale de machine (41) est reliée à la fois à des entrées analogiques (68) et à des sorties analogiques (69).

18. Dispositif selon l'une des revendications 9 à 17, **caractérisé en ce que** la commande centrale de machine (41) est reliée à la fois à des entrées numériques (66) et à des sorties numériques (67).

19. Dispositif selon l'une des revendications 9 à 18, **caractérisé en ce que** l'unité d'évaluation (51) est dotée d'une sortie qui permet la transmission de messages d'erreur à la commande centrale de machine (41).

20. Dispositif selon l'une des revendications 9 à 19, **caractérisé en ce que** la commande centrale de machine (41) est reliée à l'unité d'évaluation (51) par l'intermédiaire d'un bus.

21. Dispositif selon l'une des revendications 9 à 20, **caractérisé en ce que** la commande centrale de machine (41) est équipée d'un modem (61) de transmission de données.

22. Dispositif selon l'une des revendications 9 à 21, **caractérisé en ce que** la commande programmable conservée en mémoire dans la commande centrale de machine (41) est raccordée au système de bus par une interface OPC.

23. Dispositif selon l'une des revendications 9 à 22, **caractérisé en ce que** le système de bus est relié à l'unité d'évaluation (51) par au moins un raccordement électrique rotatif (63).

24. Dispositif selon l'une des revendications 9 à 23, **caractérisé en ce que** le détecteur de position (49) présente un générateur d'impulsions de comptage en fonction de la position.

25. Dispositif selon l'une des revendications 9 à 24, **caractérisé en ce que** la commande centrale de machine (41) présente une commande interne du déroulement qui est dotée de différentes fréquences de réaction pour différentes fonctions de commande et dans laquelle une commande de chauffage (46) à faible fréquence de réaction par rapport à une commande (48) de la roue de soufflage et une commande de soupape à plus haute fréquence de réaction par rapport à une commande (48) de la roue de soufflage sont prévues.

26. Dispositif selon l'une des revendications 9 à 25, **caractérisé en ce que** la commande centrale de machine (41) présente au moins un système de bus ouvert.

27. Dispositif selon l'une des revendications 9 à 26, **caractérisé en ce que** la commande centrale de machine (41) est dotée d'au moins un système de bus de terrain.

28. Dispositif selon l'une des revendications 9 à 27, **caractérisé en ce que** le système de visualisation (43) de la commande centrale de machine (41) est relié par un bus PCI à la commande programmable conservée en mémoire.
